# EUROPEAN PATENT SPECIFICATION

(11) **EP 4 232 414 B1**
(45) Date of publication and mention of the grant of the patent: **16.10.2024**
(21) Application number: 21798470.7
(22) Date of filing: 26.10.2021
(51) Int. Cl.: C03B 7/00

(54) **METHOD AND A SYSTEM FOR OBTAINING INFORMATION ABOUT FRICTION BETWEEN A HEATED GLASS GOB AND AT LEAST ONE GUIDE TROUGH AS WELL AS A SYSTEM FOR MANUFACTURING A GLASS PRODUCT**
VERFAHREN UND SYSTEM ZUR GEWINNUNG VON INFORMATIONEN ÜBER REIBUNG ZWISCHEN EINEM ERHITZTEN GLASPOSTEN UND MINDESTENS EINER FÜHRUNGSRINNE SOWIE SYSTEM ZUR HERSTELLUNG EINES GLASPRODUKTS
PROCÉDÉ ET SYSTÈME POUR OBTENIR DES INFORMATIONS CONCERNANT LE FROTTEMENT ENTRE UNE PARAISON DE VERRE CHAUFFÉE ET AU MOINS UNE GOULOTTE DE GUIDAGE AINSI QUE SYSTÈME DE FABRICATION D'UN PRODUIT EN VERRE

(30) Priority: 26.10.2020 NL 2026763
(43) Date of publication of application: 30.08.2023
(73) Proprietor: Centrum Voor Technische Informatica B.V., 9728 JT Groningen (NL)
(72) Inventor: DALSTRA, Joop, 9728 JT Groningen (NL)
(74) Representative: V.O.
(86) International application number: PCT/NL2021/050648
(87) International publication number: WO 2022/093016

(56) References cited:
- WO-A1-2010/047579
- US-B1- 6 477 862

## Description

The invention relates to a method for obtaining information about friction between a heated glass gob and at least one guiding trough, such as a distributor, scoop, funnel, long trough and/or deflector trough, through which the glass gob is transported to a mould for forming a glass product from the glass gob using the mould, wherein the glass product is manufactured by:
a. forming the heated glass gob;
b. transporting the glass gob through at least one guiding trough to the mould;
c. forming the glass gob into the glass product using the mould.

The invention further relates to a system for obtaining information about friction between a heated glass gob and at least one guiding trough, such as a distributor, scoop, funnel, long trough and/or deflector trough, through which the glass gob is transported to a mould for forming a glass product from the glass gob using the mould, wherein the glass product is manufactured by:
a. forming the heated glass gob;
b. transporting the glass gob through at least one guiding trough to the mould;
c. forming the glass gob into the glass product using the mould, wherein the system comprises an infrared sensor such as an infrared camera for making an image and a signal processing unit for processing signals coming from the infrared sensor.

Further, the invention relates to a system for manufacturing a glass product, the system comprising at least one guiding trough for transporting a heated glass gob to a mould and a mould for forming the glass product from the glass gob, the system further comprising an infrared sensor such as an infrared camera for making an image and a signal processing unit for processing signals coming from the infrared sensor.

Glass products, such as for example bottles, are produced by cutting a molten glass flow into heated glass gobs. Heated glass gobs are understood to be heated glass gobs that have a sufficiently high temperature to be deformed into a glass product in a mould. The glass product may be hollow (as with a bottle) or solid (as with a figurine). These glass gobs are guided via a system of troughs to a system of moulds, where they are further processed into glass products. The quality of the end product depends on the state of the glass gob. That is to say, the glass gob must possess the right temperature distribution, but also the shape, diameter and the length of the glass gob must have prescribed values and remain constant. The ideal glass gob is symmetrical and falls at the right velocity into the center of a mould and has a homogeneous temperature distribution. If the shape and/or velocity and/or diameter of the glass gob changes, the quality of the glass product will deteriorate. The glass distribution then varies more, surface damages may occur and bubbles (locally very thin glass thickness) may arise. Such glass products are rejected and thereby increase production costs.

The glass gobs typically possess a temperature of about 1100 degrees and generally have the same weight as the end product, mostly between 30 to 1500 grams.

After the formation of the glass gob, the gob accelerates by gravity. The gob is then transported via a guiding trough to a mould. Often, use is made of a plurality of moulds, one of which may, as desired, be selected for receiving the gob. For selecting the mould, use can then be made of a distributor (switch). The distributor is typically implemented as a funnel or scoop which also form a guiding trough. Such a distributor or scoop itself is typically also implemented as a guiding trough which is set up rotatably around an axis for selecting one of the guiding troughs set up downstream of the distributor. With the distributor, at least one guiding trough is then selected via which the gob is transported to the selected mould. Typically, the gob is guided to the selected mould via a selected guiding trough such as a so-called 'long trough' and a deflector trough located downstream of the long trough. Thus, the gob is typically guided via the distributor to one of the so-called 'long' guiding troughs. This long trough typically has a fall of height of a few meters. The gob velocity is thereby increased. Downstream of each long trough are typically a deflector trough and a mould. By the selected last trough, the deflector trough, the gob is guided, with a fairly sharp bend, perpendicularly downwards towards the selected mould. Of course, the system may also comprise a single long trough and associated single deflector trough and mould. The distributor is then replaced with a guiding trough in the form of a scoop or funnel which are not rotatable around the axis mentioned.

The change of velocity due to the sharp bend of the deflector trough is fairly great, which explains why the influence of the friction in the deflector trough is the greatest within the production process. From the 'long' trough, the gob bumps at high velocity against the point of impact in the deflector trough. The deflector trough is coated to minimize the friction between the gob and the deflector trough. The friction plays an important role in the change in shape of the gob. The glass gob is still liquid and changes in shape due to the forces having arisen as a result of the friction. If the friction increases, the gob will deform increasingly and become shorter in the transport direction of the trough. Due to the gob becoming shorter, the gob will become increasingly thicker and more asymmetrical. As a result, the gob does not fall into the mould properly and the quality of the end product will then deteriorate.

It is hence important to keep the friction of the guiding troughs (scoop, funnel or distributor, long trough and/or deflector trough) as low as possible and constant. Especially the friction of the deflector trough has a great influence on the velocity, length, diameter and shape of the gob. Because the velocity of the glass gob at the deflector trough is at a maximum within the production process and the change in direction is largest, the coating of the point of impact (the point where the gob, upon leaving the 'long' trough, first hits the deflector trough) will be subject to wear. The friction will first increase slowly, but when the coating is locally worn away, friction will increase rapidly and the change of the gob (length, diameter and shape) will then also rapidly become impermissible. Also the alignment of the troughs mutually may be the cause of an increased friction.

To minimize the friction that is due to the point of impact, the point of impact would have to be provided with a lubricant or with a new coating layer. If this is carried out periodically, the life of the deflector trough can be extended and the state of the gob will remain good. The trough must be lubricated solely in the environment of the point of impact, for the point of impact is mainly responsible for the change of the gob. If for instance the whole deflector trough is lubricated, or the point of impact is lubricated with an undue amount of lubricant, the gob will be contaminated and the end product will have a low quality. The layer thickness of the new coating / lubricant has to be as small as possible to prevent pollution of the glass gob. That is why it is important to know the location of the point of impact precisely, so that a new coating is applied only where necessary, to minimize pollution of the glass gob.

The object of the invention is to determine friction between a trough and a heated glass gob.

WO2010047579A1 discloses a method of filling a mould with a glass gob for forming a glass product in the mould, including observing the glass gob, after the glass gob has passed the inlet of the delivery system, by using an optical imaging device.

US6477862B1 discloses a glassware manufacturing system comprising a temperature sensor and electronics that are used to indicate an increase in gob diameter as a function of an increase in temperature at the funnel external surface.

The method according to the invention, to that end, is characterised in that the method furthermore comprises the following steps:
d. making at least one infrared image of an outer part surface of the at least one guiding trough along which, in use, the gob while making contact with the outer part surface is transported; and
e. analysing the at least one image for obtaining the information about the friction between the heated glass gob and the outer part surface of the at least one guiding trough along which the glass gob while making contact with the outer part surface is transported.

The invention is based on the insight that the hot glass gob during its passage through the at least one guiding trough will exchange heat with the at least one guiding trough. This heat exchange depends on the temperature of the glass gob, the mass of the glass gob, the shape of the glass gob and the velocity of the glass gob, the material properties of the glass gob and the trough material, the mass of the trough material, the shape of the trough material and the temperatures of the trough material. The heat exchange, however, furthermore depends on the friction between the glass gob and the trough material. If the friction increases, the heat exchange with the at least one guiding trough will increase during the passage of the gob. The higher the friction, the more heat exchange will take place between the heated glass gob and the at least one guiding trough. Due to the heat exchange, the surface temperature of the at least one guiding trough changes. The local temperature change resulting from the passage of the glass gob depends on the friction value. Because according to the invention an infrared image of an outer part surface of the at least one guiding trough is made along which, in use, the gob is transported while making contact with the outer part surface, it is possible by analysing the infrared image to obtain accurate information about the friction between the heated glass gob and the outer part surface of the at least one guiding trough along which the glass gob is transported. Because an image of the outer part surface is made along which the glass gob while making frictional contact with the outer part surface is transported, this friction can be accurately analysed, since the infrared image by definition comprises information about the temperature of the outer part surface. This is much more accurate than when a temperature (change) of the at least one guiding trough is determined at a different position than where the gob makes contact with the at least one guiding trough. Even if such other areas would also experience a temperature change as a result of the friction with the glass gob, that temperature change is an indirect change due to heat conduction within the at least one guiding trough. That temperature change depends less directly on the friction and, moreover, is delayed with respect to the moment at which the glass gob has passed.

According to the insight of the invention, an infrared image is made of the outer part surface of the at least one guiding trough along which the gob, while making contact with the outer part surface, is transported. As mentioned, this gives much more accurate results than when, for instance, an infrared image of the at least one guiding trough were made of an outer part surface of the at least one guiding trough along which the gob is not transported, for instance an outer part surface that is opposite to the outer part surface along which the gob is transported. Because the troughs are made of metal, the local temperature change will be spread. As a result, the temperature of the at least one guiding trough will slowly rise to a new equilibrium with the environment. This local temperature change can be properly measured with an infrared camera when an image is made of the outer part surface of the at least one guiding trough along which the gob is transported. When infrared images are made of the at least one guiding trough before and after the passage of the gob, the temporary temperature change can be determined. If the friction is locally higher, at that location a greater temperature increase will be measured. Thus, through this measuring method the location of an increase of the friction can be determined. If the local friction has become too high, the right corrective measures can be taken, such as applying a new coating or lubricant at the right spot, manually or with a robot. Also, it is possible to replace a guiding trough when wear has become too high and cannot be mended anymore. Of course, instead of changes in temperature, also absolute temperatures may be measured. Also, temperature profiles along the outer part surface can be determined. A peak in such a profile may then also be indicative of a peak in friction and hence of wear of the outer part surface at a position of the peak. In general, it holds that determining the temperature is connected with determining the friction.

Also, the infrared sensor and signal processing unit may be used to optimize the alignment of the troughs. The guiding troughs may be comprised of a plurality of troughs. These need to be mutually aligned to obtain a minimal friction.

On the basis of the images comprising for instance the mutually proximal ends of two troughs, the alignment of the troughs can be optimized by measuring what position of the troughs gives the smallest temperature difference and/or by determining whether the position where a gob first hits a guiding trough is a desired position (centered and proper position).

Because a guiding trough with a higher friction value exchanges more heat with the passing glass gob, such trough becomes hotter in time. With an infrared sensor, in particular an infrared camera, also the temperature can be determined and compared with the other trough systems in the glass production. If the temperature deviates too much, an appropriate correction may be carried out or these troughs may be further inspected.

With the infrared sensor, multiple heat pictures of a location of the guiding trough can be made during, before and after the passage of the gob. The differences in intensity and/or colour of the radiated infrared radiation can be determined. These differences can arise because of the temperature differences. The intensity and/or colour in the infrared image of a particular position of the outer part surface along which a glass gob has passed is a measure of the temperature of the outer part surface at the particular position and hence gives information about the friction between glass gob and outer part surface at the particular position. The intensity and/or colour in the infrared image of a particular position of the outer part surface along which a glass gob has passed is hence also a measure of the friction between the glass gob and the outer part surface at the particular position. In particular, a change of this intensity and/or colour resulting from the passage of the gob is an accurate measure of the friction.

Also, the thus determined information about the friction can give information as to where a glass gob impinges upon the at least one guiding trough from a part upstream of the at least one guiding trough, of the trajectory along which the gob is transported to the mould. In particular, the intensity and/or colour in the infrared image of the outer part surface can give information about the location where a glass gob impacts. Also, in particular, a change in this intensity and/or colour can give information about the location where a glass gob impacts. A rejection limit (predetermined value) may be determined which corresponds to the maximum permissible friction.

More cameras than one may be used to inspect different troughs. Also, a moving camera may be used to make images of the different locations of the troughs. This may be done manually or automatically, for instance with a robot system. Also, a coating or lubricant may be applied to an outer part surface of a guiding trough at a particular position of the outer part surface with a robotic system if at this position a friction becomes too high or if it is known that this position is the point where a gob impinges on the at least one guiding trough from another part of the system.

The size and dimensions of the deflector trough depend on the type of product. Hence, the position and dimensions of the deflector trough are often unknown.

Because a single infrared camera is unable to determine the 3D location of the points of impact with high friction in the 3D space, use can be made of a plurality of sensors which from mutually different positions make infrared images of the outer part surface, or of a single movable sensor which makes infrared images of the outer part surface from mutually different positions in succession.

With this plurality of images, the position of the points of impact in the 3D space can be computed. This position can then be used for an automatic coating/lubrication system, for instance executed by a robot under control of the signal processing unit.

From the foregoing it follows that, in particular, the information about the friction is determined by the determination of an intensity and/or the colour of pixels of the at least one image. Also, it holds that in particular the information about the friction is determined from an image that has been made after the gob has passed at least a part of the outer part surface. Further, it holds that in particular at least a first image is made after the gob has passed at least a part of the outer part surface and at least a second image is made before the gob has reached at least the part of the outer part surface, wherein the first and second image are compared with each other for obtaining the information about the friction. Also, it holds that in particular the intensity and/or colour of at least a first pixel of the first image is compared with the intensity and/or colour of at least a second pixel of the second image for obtaining information about the friction between the glass gob and the outer part surface at the location of the first and/or second pixel, wherein in particular the first pixel has a same position within the first image as the second pixel within the second image.

According to a preferred embodiment, it holds that the method furthermore comprises a step f1. wherein in step f1. on the basis of the information about the friction it is determined at what position of the outer part surface of the at least one guiding trough a friction is present that exceeds a predetermined value.

If it is detected that the friction exceeds a predetermined value at a particular position, this particular position may for instance be lubricated.

Further, it holds according to a preferred embodiment that the method furthermore comprises a step f2. wherein in step f2. on the basis of the information about the friction it is determined of what magnitude the friction at a predetermined position of the outer part surface of the at least one guiding trough is. The predetermined position whose friction is determined may for instance be the position where a heated glass gob impinges upon a deflector trough. If the friction becomes too high, for instance the position may be lubricated.

It is also possible that the method comprises a step f3. wherein in step f3. on the basis of the information about the friction it is determined whether at a predetermined position in the at least one guiding trough a friction is present that exceeds a predetermined value. The predetermined position may again be a position where, in use, the glass gob strikes against a guiding trough, in particular the deflector trough.

According to a further preferred embodiment, it holds that the method furthermore comprises a step f4. wherein in step f4. on the basis of the information about the friction the course of the friction along a predetermined trajectory along the outer part surface of the at least one guiding trough is determined. The course of the temperature along a predetermined trajectory can also make it clear that there is a position along this predetermined trajectory where the friction is relatively higher than at other positions of the trajectory. This may for instance become manifest in that within the trajectory a local temperature prevails that is higher than at other positions of the trajectory. In that case too, measures can be taken by, for instance, lubricating the trajectory at the particular position.

Further, it holds in particular that the method furthermore comprises a step f5. wherein in step f5. on the basis of the information about the friction a change of the friction in time of a predetermined trajectory of the outer part surface of the at least one guiding trough, or a predetermined position of the outer part surface of the at least one guiding trough, is determined. If it appears that with the lapse of time the friction along the predetermined trajectory or at the predetermined position increases, it may again be decided to lubricate the predetermined trajectory at the predetermined position.

Further, it holds in particular that the position and/or orientation of the at least one guiding trough is adjusted when on the basis of the information about the friction it is determined that the friction exceeds a predetermined value. If the position where the gob impacts is not the desired position, for instance a position and/or orientation of the at least one guiding trough concerned may be adjusted.

In particular, it holds that the position and/or orientation of the at least one guiding trough is adjusted when in step f2 it is determined that the friction exceeds a predetermined value.

Preferably, it holds that the position and/or orientation of the at least one guiding trough is adjusted when in step f4 it is determined that the friction at the predetermined position exceeds a predetermined value. If the image is a 3D image, the magnitude of the friction may, depending on the position on the outer part surface, be determined still more accurately.

The system according to the invention for obtaining information about the friction is characterised in that the infrared sensor is configured for making at least one infrared image of an outer part surface of the at least one guiding trough along which, in use, the gob is transported and that the signal processing unit is configured for, in use, analysing the at least one image for obtaining the information about the friction between the heated glass gob and the outer part surface of the at least one guiding trough along which the glass gob (while making contact with the outer part surface) is transported.

The system for manufacturing a glass product according to the invention is characterised in that the infrared sensor is configured for making at least one infrared image of an outer part surface of the at least one guiding trough along which, in use, the gob is transported and that the signal processing unit is configured for, in use, analysing the at least one image for obtaining the information about the friction between the heated glass gob and the outer part surface of the guiding trough along which the glass gob (while making contact with the outer part surface) is transported.

The invention will now be further explained on the basis of the drawing. In the drawing:
Figure 1 shows a system according to the invention for carrying out a method according to the invention;
Figure 2 is a cross section of a 'long' trough of the system according to Figure 1;
Figure 3 is a cross section of a deflector trough of the system according to Figure 1;
Figure 4 is a cross section of a funnel of the system according to Figure 1; and
Figure 5 is a top plan view in the direction of the arrow P of an extension of the system of Figure 1.

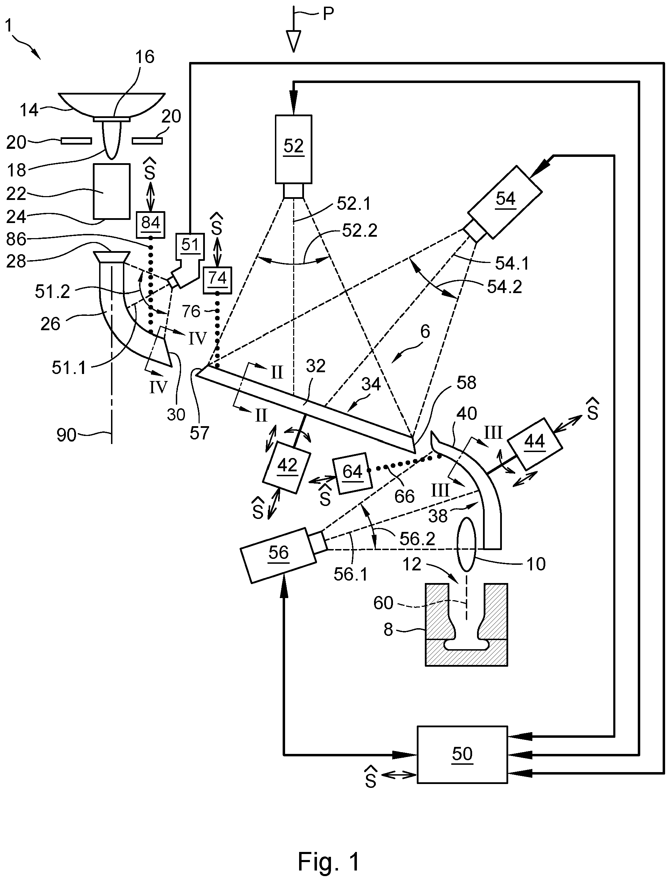

In Figure 1 a system according to the invention is indicated with reference numeral 1. The system comprises an apparatus 6 for, among other purposes, filling a mould 8 with a heated glass gob 10. The glass gob has a temperature so high that it can still be deformed. When the glass gob 10 falls into the mould 8, in the mould a glass product is formed from the glass gob. The apparatus for forming and transporting the glass gob 10 includes a reservoir 14 in which molten glass is present. The reservoir 14 is provided with an opening 16 through which molten glass 18, under the influence of gravity, can flow out in the form of a glass rod 18. The apparatus 6 includes a pair of shear blades 20 to detach a glass gob from the glass rod 18 flowing out of the reservoir 14. The glass gob which is formed using the shear blades proceeds to fall into an accelerator 22 for accelerating the formed glass gob. Such an accelerator 22 can accelerate the glass gob under the influence of pressure differences being created with respect to the environment. The glass gob leaves the accelerator 22 via an opening 24 of the accelerator and then ends up in a funnel 26 which, to this end, is provided with an opening 28. The glass gob leaves the funnel 26 via an opening 30 and lands in a 'long' trough 32 which is open at its upper side. The trough in this example has a length of a few meters and also a fall of height of a few meters. As can be seen, the trough is hollow (concave) and provided with a first outer part surface 34 along which, in use, the glass gob is transported while making contact with the first outer part surface. The trough is also provided with a second outer part surface 36 which, in use, does not come into contact with the glass gob. When the gob slides down along the outer part surface 34 of the trough 32, it will accelerate. The glass gob will thereupon leave the trough 32, to be further transported along a first outer part surface 38 of the deflector trough 40, the first outer part surface 38 being directed, in a transport direction 41 of the glass gob, in a manner bent downwardly. The path of travel of the gob 10 will thereby be deflected in the direction of an inlet opening 12 of the mould 8. The glass gob is transported along the first outer part surface 38, with the glass gob making contact with the outer part surface 38. The glass gob here does not make any contact with the second outer part surface 40 opposite the first outer part surface 38.

The trough 32 is connected with an actuator 42 to set the position and/or orientation of the trough 32. Such setting may be carried out manually, but in this example the actuator 42 is controlled by means of control signals ŝ which are generated by a signal processing unit 50 to be further discussed hereinafter. The position and/or orientation of the deflector trough 40 can be set using an actuator 44. The actuator 44 may be operated manually. In this example, however, the actuator is operated with control signals ŝ which signals ŝ are likewise generated using the signal processing unit 50.

The system according to the invention further includes a first infrared sensor 52, a second infrared sensor 54 and a third infrared sensor 56. The infrared sensors 52, 54 and 56 in this example are each implemented as an infrared camera. The infrared camera 52 has an optical axis 52.1 and an angle of view which is indicated with the arrow 52.2. Likewise, the infrared camera 54 is provided with an optical axis 54.1 and an angle of view which is indicated with the arrow 54.2. The infrared camera 56 comprises an optical axis 56.1 and an angle of view which is indicated with the arrow 56.2. The infrared cameras 52 and 54 are set up in such a way that each of them can make an infrared image of the outer part surface 34 of the trough 32. Due to the infrared cameras 52 and 54 having a mutually different position and orientation with respect to the trough 32, from the infrared images made with the cameras 52 and 54, a 3D image of the first outer part surface 34 can be obtained. Output signals of the cameras 52 and 54 are, to that end, supplied to the signal processing unit 50. The camera 56 is directed such that it can make an image of the first outer part surface 38 of the deflector trough 40 along which, in use, the gob 10 is passed. Output signals of the camera 56 which represent the image are likewise supplied to the signal processing unit 50. The system described up to this point works as follows.

First of all, from the reservoir 14 molten glass is separated in the form of the vertical rod 18 from which a glass gob 10 is cut loose using the shear blades 20. The glass gob then moves via the accelerator 22 and the funnel 26 to the trough 32. Using the infrared camera 52 an infrared image of the outer part surface 34 of the trough is made along which, in use, the gob (while making contact with the first outer part surface of the trough) is transported. Also with the aid of the camera 54 an image of the first outer part surface 34 is made. Both images are supplied to the signal processing unit 50. The signal processing unit 50 analyses both images for obtaining information about the friction between the heated glass gob and the outer part surface 34 of guiding trough 32 along which the gob, while making contact with the outer part surface 34, is transported. Because the images are infrared images, the intensity and/or colour of the image will depend on the height of the temperature of the first outer part surface 34. If a particular part of the outer part surface 34 has a relatively high temperature, this will become manifest by a high intensity of that part in the images and of a specific colour.

It is noted that the signal processing unit may be configured to combine both images for obtaining a 3D image. Also this 3D image may then in turn be analysed for obtaining the information about the friction between the heated glass gob and the outer part surface of the guiding trough.

In particular, therefore, it holds that the intensity and/or colour of the image is analysed by the signal processing unit 50 for obtaining the information about the friction between the heated glass gob and the outer part surface of the guiding trough along which the glass gob, while making contact with the outer part surface, is transported. In this example, the signal processing unit is configured for, in use, determining the information about the friction from an image that has been made after the gob has passed at least a part 70 of the outer part surface. The part 70 can be a part of the outer part surface that is expected to be subject to wear. It is also possible that the signal processing unit is configured to analyse not just the part 70 but the whole outer part surface 34. It is also possible, however, that under control of the signal processing unit at least a first image is made after the gob has passed in any case the part 70 of the outer part surface 34 and at least a second image is made before the gob has reached in any case said part of the outer part surface 34, while the signal processing unit is configured for comparing the first and second image with each other for obtaining the information about the friction. The part 70 may be a part of the outer part surface that is expected to be subject to wear. It is also possible to make the first recording after the gob has passed the complete outer part surface 34. Also, the second recording can be made before the gob reaches the first outer part surface 34. Further, it is possible that the signal processing unit is configured for, in use, comparing the intensity and/or colour of at least a first pixel of the first image with the intensity and/or colour of at least a second pixel of the second image for obtaining information about the friction between the gob 10 and the outer part surface 34 at the location of the first and/or second pixel, while, in particular, the first pixel has a same position within the first image as the second pixel within the second image. The first pixel may for instance be located approximately halfway the length of the trough 32 and the second pixel a bit downstream thereof. If the intensity and/or colour of the first pixel is then indicative of a much higher temperature than the intensity and/or colour of the second pixel, this may be the result of an increased friction at the location of the first pixel. Also, it is possible that the first and second pixel are at a same position in the first and second image and thus relate to one and the same position of the outer part surface 34. If the intensity and/or colour of the first pixel is then indicative of a much higher temperature than the intensity and/or colour of the second pixel, this may be the result of an increased friction at the location of the first pixel. It is thus possible that the signal processing unit is configured to determine of a position of the outer part surface the intensity and/or colour, with this position being indicated in the image. On the basis of this intensity and/or colour, it can be determined in a manner known per se what the temperature is of this position. This temperature in turn is then also a measure of the friction. This friction may even be determined in an absolute sense when other parameters are known that determine the temperature of the outer part surface, such as the temperature of the gob, the velocity of the gob, the shape of the gob, the mass of the gob, the material properties of the gob, the shape of the trough, the mass of the trough, the material properties of the trough, the direction of the trough and the temperatures of the trough before a gob is guided therethrough. The temperature of the outer part surface is determined by these parameters together with the friction. If the temperature and these parameters are known, the friction in an absolute sense can be determined.

In particular, it holds that the signal processing unit is configured for carrying out a step f1. wherein, in use, in step f1. on the basis of the information about the friction it is determined at what position of the outer part surface of the trough 32 a friction is present that exceeds a predetermined value. If this is the case, the respective position may for instance be lubricated. Such lubricating may again be carried out using a schematically represented lubricant element 74 which can dispense a lubricant 76 to the trough and, in particular, may also be configured to select, as desired, a position of the trough to which the lubricant 76 is to be supplied. It is also possible that the signal processing unit is further configured for carrying out a step f2. wherein, in use, in step f2. on the basis of the information about the friction it is determined of what magnitude the friction at a predetermined position of the outer part surface 34 of the trough is.

Further, it is possible that the signal processing unit is configured for carrying out a step f3. wherein, in use, in step f3. on the basis of the information about the friction it is determined whether at the predetermined position in the trough a friction is present that exceeds a predetermined value. The predetermined position may for instance be a position near an inlet 57 of the trough 32. If it appears, for instance, that the temperature or the friction of the outer part surface at the inlet 57 is too high, this may be caused by the inlet 57 not being properly aligned with the opening 30 of the funnel. If the inlet 57 is for instance disposed at slightly too high a level, the gob will impinge hard upon the outer part surface at the inlet 57 every time, so that the temperature of this portion of the outer part surface will increase and thereby also the resistance that the glass gob sustains from the trough will increase. The signal processing unit 50 may be configured, if the information about the friction exceeds a predetermined value, to control the actuator for setting the position and/or orientation of the trough 32 with respect to the opening 30 so that the inlet 57 of the trough and the opening 30 are better aligned with each other. The signal processing unit may further be configured for carrying out a step f4. wherein, in use, in step f4. on the basis of the information about the friction the course of the friction along a predetermined trajectory along the outer part surface of the trough is determined. In this way, it may for instance be determined that the friction at a particular position of the trough is rising with respect to the friction in the rest of the trough. This may mean that at this position a coating of the trough is disappearing. This may then be remedied by applying a coating, or applying lubricant 76 using the lubricant element 74 at the respective position under control of the signal processing unit 50.

In particular, it holds furthermore that the signal processing unit is further configured for carrying out a step f5. wherein, in use, in step f5. on the basis of the information about the friction a change of the friction in time of a predetermined trajectory of the outer part surface of the trough, or of a predetermined position of the outer part surface of the trough, is determined. Of the whole outer part surface of the trough, the signal processing unit can thus determine the local friction. When this friction increases in time, this is a sign that there is wear. The above-mentioned predetermined trajectory of the outer part surface may also be a part of the outer part surface, for instance trajectories located adjacent the inlet 57 or the outlet 58 of the trough 32. It is also possible, however, that the friction of a predetermined position of the outer part surface of the trough is analysed to see how this friction develops in time. The predetermined position may then, for instance, again be a position of the outer part surface adjacent the inlet 57 or the outlet 58.

Each of the above-mentioned measurements may bring with it that under the control of the signal processing unit the outer part surface of the trough is provided with a lubricant. Also, with each of the above-mentioned measurements, it is possible that under the control of the signal processing unit the position and/or orientation of the trough 32 is adjusted. This may then be done when the friction rises too high at any random position of the trough or rises too high at a predetermined position in the trough. Such rising too high can be established when a predetermined value for the friction is exceeded. It is also possible, however, that seen in time the friction rises too rapidly and that this is qualified as a rising too high of the friction. Such variants each fall within the framework of the invention. When herein mention is made of the friction rising too high, this may be about a parameter rising too high and representing the friction. This parameter need not represent an absolute value of the friction, but can also represent a relative value of the friction. This relative value may even be a discrete value such as very low, low, normal, high and very high.

When the gob leaves the trough 32 at the outlet 58, it will impinge upon an outer part surface 38 of the deflector trough 40 at a high velocity. The path of the gob is deflected by the deflector trough 40 in a manner such that the gob comes out exactly above the inlet 12 of the mould 8 and falls down vertically along an axis 60. In this example, with just a single camera 56 an infrared image is made of the outer part surface 38 of the deflector trough 40 along which the gob, in use, while contacting this outer part surface 38, moves. The images that are made using the infrared camera 56 are supplied to the signal processing unit 50 again. Entirely analogously to what has been discussed above, the signal processing unit 50 can, on the basis of the infrared image, determine information about friction between the gob and the outer part surface. This information about the friction can then be determined for any position where the gob touches the outer part surface. If the friction at a predetermined position or a random position exceeds a predetermined value, a lubricant can be supplied to the outer part surface 38 manually or automatically. To this end, the system may further include a lubricant element 64 which can dispense a lubricant 66, for instance in the form of a jet directed towards the outer part surface 38. Here, it may be chosen, for instance, to direct the jet solely to that point of the outer part surface where the friction and/or the temperature rises too high. Of course, also the course of the friction in the trough in time may be determined. If the friction seen in time rises too high or rises too rapidly, also with the aid of the lubricant element 64 a lubricant 66 can be supplied to the outer part surface 38. Also, it is conceivable that the lubricant is supplied solely to that position where, seen in time, the friction and/or the temperature rises too high.

Entirely analogously to what has been discussed hereinbefore, it is also possible that it is determined from the infrared images 56 where a glass gob leaving the trough 32 via the outlet 58 impinges upon the outer part surface 38 of the deflector trough 40. Preferably, this is a predetermined desired position. This position where the gob impacts is characterised by an increased friction (and hence an increased temperature) which is visible in the infrared image which is made using the camera 56. If the position is not the desired position, the actuator 44 may be controlled, manually or possibly under control of the signal processing unit 50, to change or readjust the orientation and/or position of the deflector trough, in such a manner that the glass gob impinges upon the desired position in the deflector trough.

If this desired position has been reached, this will also have to appear from the next image that, after a next gob has impinged upon the outer part surface 38 of the deflector trough 40, is made using infrared camera 56. If the desired position has not been fully reached yet, a further readjustment of the position and/or orientation of the trough 40 can be effected under control of the signal processing unit. Thus, a feedback loop has been realized, which ensures that the respective position of impact is always equal to the desired impact position.

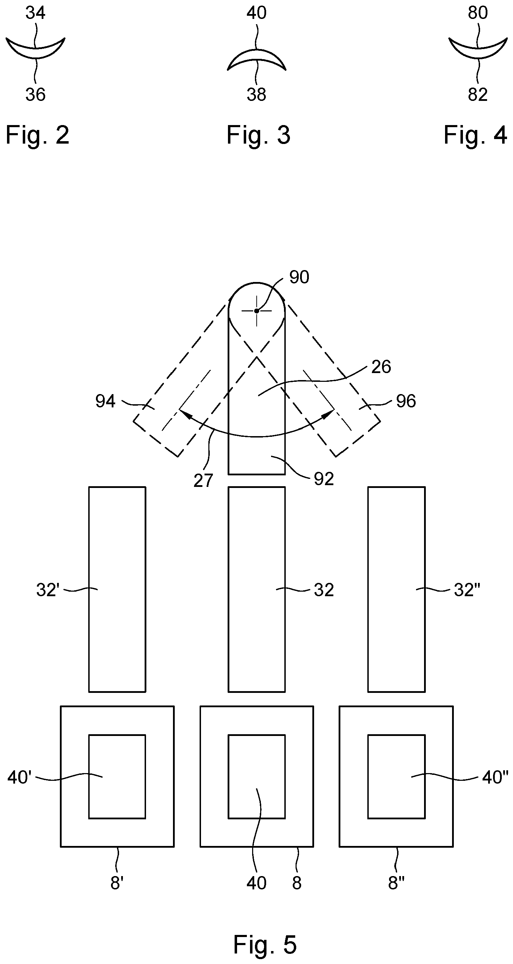

The invention is in no way limited to the above-outlined embodiment. For instance, the camera 54 may be omitted so that only an image made with the camera 52 is analysed. This always concerns a 2D image, then. Also, it is possible that the outer part surface 38 of the deflector trough, by contrast, is inspected with two cameras. In that case, with each of these cameras an image is made of the outer part surface 38 or a part thereof, and the two images can be processed in combination for obtaining a 3D image. This 3D image in turn may then be used again to determine the information about the friction between the outer part surface and the glass gob and possibly, on the basis thereof, to adapt settings of the system. Also, it is conceivable that when information about the friction indicates that a friction is too high, the signal processing unit generates a signal such as an alert signal. This may then be a sign for operators to carry out service on the system, for instance by replacing the trough 32 and/or the deflector trough 40 with a new trough. Such variants are each understood to fall within the framework of the invention. In this example, the outer part surface 34 of the trough 32 falls wholly within the angle of view 52.2 of the camera 52. It is also possible that only a part of the outer part surface 34 of the trough 32 falls within the angle of view 52.2 of the camera 52. Likewise, in this example, the outer part surface 34 of the trough 32 falls wholly within the angle of view 54.2 of the camera 54. It is also possible that only a part of the outer part surface 34 of the trough 32 falls within the angle of view 54.2 of the camera 54. Also, in this example, the outer part surface 38 of the trough 40 falls wholly within the angle of view 56.2 of the camera 56. It is also possible that only a part of the outer part surface 38 of the trough 40 falls within the angle of view 56.2 of the camera 56. The funnel 26 in this example is also implemented as a guiding trough, here also called scoop. The funnel / scoop is provided with a first outer part surface 80 (see Fig. 4) along which, in use, the glass gob is transported while contacting the first outer part surface 80. The funnel / scoop 26 is also provided with a second outer part surface 82 which, in use, does not come into contact with the glass gob. The system of Figure 1 may optionally include a camera 51 with an angle of view 51.2 and an optical axis 51.1 for making at least one infrared image of an outer part surface of the funnel / scoop 26 along which, in use, the gob while making contact with the outer part surface is transported; and for analysing the at least one image for obtaining the information about the friction between the heated glass gob and the outer part surface of the funnel / scoop 26 along which the glass gob, while making contact with the outer part surface, is transported. To that end, signals obtained with the camera 51 are supplied to the signal processing unit 50 and processed as discussed hereinbefore for the signals coming from the cameras 52, 54 and 56. Entirely analogously to what has been described above for the actuators 42, 44, the position and/or orientation of the funnel / scoop 26 may, in response to the signal processing of signals from the camera 51, be adjusted with an actuator 43. Also, entirely analogously to the lubricant elements 64, 74, a lubricant element 84 may be used to supply a lubricant 86 to the funnel / scoop in response to the signal processing of signals from the camera 51.

According to another variant, as schematically shown in Figure 5, the funnel / scoop 26 may also be implemented as a so-called distributor which is set up rotatably around an axis 90 which is also indicated in Figure 1. In the operative position indicated with reference numeral 92, the system works as discussed for Figure 1. The system of Figure 5 is equal to the system of Figure 1 but includes as a supplement a second long trough 32', a second deflector trough 40' located downstream of the second long trough, and a second mould 8' located downstream of the second deflector trough 40'. By putting the funnel / scoop 26 in the operative position indicated with reference numeral 94, a gob is supplied via the funnel / scoop 26, second long trough 32' and second deflector trough 40' to the mould 8'. Using cameras not shown, infrared images of a first outer part surface of the second long trough 32' and a first outer part surface of the second deflector trough 40' can be made and be processed entirely analogously to the manner as discussed above for the long trough 32 and the deflector trough 40. Also, the position and/or orientation of the second long trough 32' and/or the second deflector trough 40' may be readjusted as discussed above for the long trough 32 and the deflector trough 40. Also, a lubricant can be supplied to the second long trough 32' and/or the second deflector trough 40', as discussed above for the long trough 32 and the deflector trough 40. The system of Figure 5 has further been supplemented vis-à-vis Figure 1 with a third long trough 32", a third deflector trough 40" located downstream of the third long trough, and a third mould 8" located downstream of the third deflector trough 40". By putting the funnel / scoop 26 in the operative position indicated with reference numeral 96, a gob is supplied via the funnel / scoop 26, third long trough 32" and third deflector trough 40" to the third mould 8". Using cameras not shown, infrared images of a first outer part surface of the third long trough 32" and a first outer part surface of the third deflector trough 40" can be made and be processed entirely analogously to the manner as discussed above for the long trough 32 and the deflector trough 40. Also, the position and/or orientation of the third long trough 32" and/or the third deflector trough 40" can be readjusted as discussed above for the long trough 32 and the deflector trough 40. Also, a lubricant can be supplied to the third long trough 32" and/or the third deflector trough 40" as discussed above for the long trough 32 and the deflector trough 40.

## Claims

1. Method for obtaining information about friction between a heated glass gob (10) and at least one guiding trough (6), such as a distributor, scoop, long trough and/or deflector trough, through which the glass gob is transported to a mould (8) for forming a glass product from the glass gob using the mould, wherein the glass product is manufactured by:
a. forming the heated glass gob;
b. transporting the glass gob through at least one guiding trough to the mould;
c. forming the glass gob into the glass product using the mould, **characterised in that** the method furthermore comprises the following steps:
d. making at least one infrared image of an outer part surface (34, 36, 38) of the at least one guiding trough along which, in use, the gob while making contact with the outer part surface is transported; and
e. analysing the at least one image for obtaining the information about the friction between the heated glass gob and the outer part surface along which the glass gob while making contact with the outer part surface is transported.

2. Method according to claim 1, **characterised in that** the information about the friction is determined by the determination of an intensity and/or the colour of pixels of the at least one image.

3. Method according to any one of the preceding claims, **characterised in that** the information about the friction is determined from an image which has been made after the gob has passed at least a part (70) of the outer part surface.

4. Method according to any one of the preceding claims, **characterised in that** at least a first image is made after the gob has passed at least a part (70) of the outer part surface and that at least a second image is made before the gob has reached at least said part of the outer part surface, wherein the first and second image are compared with each other for obtaining the information about the friction, wherein optionally the intensity and/or colour of at least a first pixel of the first image is compared with the intensity and/or colour of at least a second pixel of the second image for obtaining the information about the friction between the glass gob and the outer part surface at the location of the first and/or second pixel, wherein in particular the first pixel has a same position within the first image as the second pixel within the second image.

5. Method according to any one of the preceding claims, **characterised in that**:
the method furthermore comprises a step f1. wherein in step f1. on the basis of the information about the friction it is determined at what position of the outer part surface of the at least one guiding trough a friction is present that exceeds a predetermined value; and/or
the method furthermore comprises a step f2. wherein in step f2. on the basis of the information about the friction it is determined of what magnitude the friction at a predetermined position of the outer part surface of the at least one guiding trough is; and/or
the method furthermore comprises a step f3. wherein in step f3. on the basis of the information about the friction it is determined whether at a predetermined position in the at least one guiding trough a friction is present that exceeds a predetermined value; and/or
the method furthermore comprises a step f4. wherein in step f4. on the basis of the information about the friction the course of the friction along a predetermined trajectory along the outer part surface of the at least one guiding trough is determined; and/or
the method furthermore comprises a step f5. wherein in step f5. on the basis of the information about the friction a change of the friction in time of a predetermined trajectory of the outer part surface of the at least one guiding trough or a predetermined position of the outer part surface of the at least one guiding trough is determined.

6. Method according to any one of the preceding claims, **characterised in that** the outer part surface of the at least one guiding trough is provided with a lubricant (76) when on the basis of the information about the friction it is determined that the friction exceeds a predetermined value.

7. Method according to at least claim 5, **characterised in that**:
the outer part surface of the at least one guiding trough is provided with a lubricant (76) when in step f2 it is determined that the friction exceeds a predetermined value, and/or when in step f4 it is determined that the friction at the predetermined position exceeds a predetermined value, and/or when in step f5 it is determined that the friction at the predetermined position exceeds a predetermined value.

8. Method according to any one of the preceding claims, **characterised in that** the position and/or orientation of the at least one guiding trough is adjusted when the friction exceeds a predetermined value.

9. Method according to at least claim 5, **characterised in that** the position and/or orientation of the at least one guiding trough is adjusted when in step f2 it is determined that the friction exceeds a predetermined value, and/or when in step f4 it is determined that the friction at the predetermined position exceeds a predetermined value, and/or when in step f5 it is determined that the friction at the predetermined position exceeds a predetermined value.

10. Method according to any one of the preceding claims, **characterised in that** on the basis of the determined friction it is determined where the gob impacts in the at least one guiding trough.

11. Method according to any one of the preceding claims, **characterised in that** on the basis of the determined friction the position where the gob impacts is set.

12. Method according to any one of the preceding claims, **characterised in that** the infrared image is a 3D image.

13. System (1) for obtaining information about friction between a heated glass gob (10) and at least one guiding trough (6), such as a distributor, scoop, funnel, long trough and/or deflector trough, through which the glass gob is transported to a mould for forming a glass product from the glass gob using the mould, wherein the glass product is manufactured by:
a. forming the heated glass gob;
b. transporting the glass gob through at least one guiding trough to the mould;
c. forming the glass gob into the glass product using the mould, wherein the system comprises an infrared sensor (52, 54, 56) such as an infrared camera for making an image and a signal processing unit (50) for processing signals coming from the infrared sensor, **characterised in that** the infrared sensor is configured for making at least one infrared image of an outer part surface (34, 36, 38) of the at least one guiding trough along which, in use, the gob while making contact with the outer part surface is transported and that the signal processing unit is configured for, in use, analysing the at least one image for obtaining the information about the friction between the heated glass gob and the outer part surface of the at least one guiding trough along which the glass gob while making contact with the outer part surface is transported.

14. System according to claim 13, **characterised in that** the signal processing unit is configured for, in use, determining information about the friction from a determination of an intensity and/or colour of pixels of the at least one image, and/or from an image which has been made after the gob has passed at least a part (70) of the outer part surface.

15. System according to any one of claims 13-14, **characterised in that** under control of the signal processing unit at least a first image is made after the gob has passed at least a part (70) of the outer part surface and at least a second image is made before the gob has passed at least said part of the outer part surface, wherein the signal processing unit is configured for comparing the first and second image with each other for obtaining the information about the friction, and/or **in that** the signal processing unit is configured for, in use, comparing the intensity and/or colour of at least a first pixel of the first image with the intensity and/or colour of at least a second pixel of the second image for obtaining the information about the friction between the glass gob and the outer part surface at the location of the first and/or second pixel, wherein in particular the first pixel has a same position within the first image as the second pixel within the second image.

16. System according to any one of claims 13-15, **characterised in that** the signal processing unit is further configured for carrying out:
a step f1. wherein, in use, in step f1. on the basis of the information about the friction it is determined at what position of the outer part surface of the at least one guiding trough a friction is present that exceeds a predetermined value; and/or
a step f2. wherein, in use, in step f2. on the basis of the information about the friction, it is determined of what magnitude the friction at a predetermined position of the outer part surface of the at least one guiding trough is; and/or
a step f3. wherein, in use, in step f3. on the basis of the information about the friction it is determined whether at the predetermined position in the at least one guiding trough a friction is present that exceeds a predetermined value; and/or
a step f4. wherein, in use, in step f4. on the basis of the information about the friction the course of the friction along a predetermined trajectory along the outer part surface of the at least one guiding trough is determined; and/or
a step f5. wherein, in use, in step f5. on the basis of the information about the friction a change of the friction in time of a predetermined trajectory of the outer part surface of the at least one guiding trough or a predetermined position of the outer part surface of the at least one guiding trough is determined.

17. System according to any one of the preceding claims 13-16, **characterised in that** the system is configured for, in use, under control of the signal processing unit, providing the outer part surface of the at least one guiding trough with a lubricant (76) when on the basis of the information about the friction it is determined that the friction exceeds a predetermined value.

18. System according to claim 16 and optionally one of claims 13-15, 17, **characterised in that** the system is configured for, in use, under control of the signal processing unit, providing the outer part surface of the at least one guiding trough with a lubricant (76) when in step f2. it is determined by the signal processing unit that the friction exceeds the predetermined value, and/or when in step f4. it is determined by the signal processing unit that the friction exceeds the predetermined value, and/or when in step f5. it is determined by the signal processing unit that the friction exceeds the predetermined value.

19. System according to any one of the preceding claims 13-18, **characterised in that** the system is configured for, in use, under control of the signal processing unit, adjusting the position and/or orientation of the at least one guiding trough when the friction exceeds a predetermined value.

20. System according to claim 16 and optionally one of claims 13-15, 17-19, **characterised in that** the system is configured for, in use, under control of the signal processing unit, adjusting the position and/or orientation of the at least one guiding trough when in step f2. it is determined by the signal processing unit that the friction exceeds the predetermined value, and/or when in step f4. it is determined by the signal processing unit that the friction exceeds the predetermined value, and/or when in step f5. it is determined by the signal processing unit that the friction exceeds the predetermined value.

21. System according to any one of the preceding claims 13-20, **characterised in that** the signal processing unit is configured for, in use, on the basis of the determined friction, determining where the gob impacts in the at least one guiding trough, and/or **in that** the system is configured for, in use, under control of the signal processing unit, on the basis of the determined friction, setting the position where the gob impacts, and/or **in that** the at least one sensor is configured for making the image in the format of a 3D image, and/or **in that** the system comprises a plurality of infrared sensors (52, 54, 56) for making the image in the format of a 3D image.

## Patentansprüche

1. Verfahren zur Gewinnung von Informationen über die Reibung zwischen einem erhitzten Glastropfen (10) und mindestens einer Führungsrinne (6), wie einem Verteiler, einem Schöpfer, einer langen Rinne und/oder einer Ablenkrinne, durch die der Glastropfen zu einer Form (8) transportiert wird, um aus dem Glastropfen unter Verwendung der Form ein Glasprodukt zu formen, wobei das Glasprodukt hergestellt wird durch:
a. Bildung des erhitzten Glastropfens ;
b. Transport des Glastropfens durch mindestens eine Führungsrinne zur Form;
c. Formen des Glastropfens zum Glasprodukt unter Verwendung der Form, **dadurch gekennzeichnet, dass** das Verfahren ferner folgende Schritte umfasst:
d. Erstellen mindestens eines Infrarotbildes einer Außenoberfläche (34, 36, 38) der mindestens einen Führungsrinne, entlang derer im Betrieb der Tropfen transportiert wird, während er mit der Außenfläche in Kontakt kommt; und
e.Analyse des mindestens einen Bildes, um die Information über die Reibung zwischen dem erhitzten Glastropfen und der Außenoberfläche zu erhalten, entlang derer der Glastropfen beim Kontakt mit der Außenoberfläche transportiert wird.

2. Verfahren nach Anspruch 1, **dadurch gekennzeichnet, dass** die Information über die Reibung durch die Bestimmung einer Intensität und/oder Farbe von Pixeln des mindestens einen Bildes ermittelt wird.

3. Verfahren nach einem der vorhergehenden Ansprüche, **dadurch gekennzeichnet, dass** die Information über die Reibung aus einem Bild bestimmt wird, das gemacht wurde, nachdem der Tropfen zumindest einen Teil (70) der Außenoberfläche passiert hat.

4. Verfahren nach einem der vorhergehenden Ansprüche, **dadurch gekennzeichnet, dass** mindestens ein erstes Bild gemacht wird, nachdem der Tropfen mindestens einen Teil (70) der Außenoberfläche passiert hat, und dass mindestens ein zweites Bild gemacht wird, bevor der Tropfen mindestens diesen Teil der Außenoberfläche erreicht hat, wobei das erste und das zweite Bild miteinander verglichen werden, um die Information über die Reibung zu erhalten, wobei optional die Intensität und/oder Farbe mindestens eines ersten Pixels des ersten Bildes mit der Intensität und/oder Farbe mindestens eines zweiten Pixels des zweiten Bildes verglichen wird, um die Information über die Reibung zwischen dem Glastropfen und der Außenoberfläche an der Stelle des ersten und/oder zweiten Pixels zu erhalten, wobei insbesondere das erste Pixel eine gleiche Position innerhalb des ersten Bildes hat wie das zweite Pixel innerhalb des zweiten Bildes.

5. Verfahren nach einem der vorhergehenden Ansprüche, **dadurch gekennzeichnet, dass**:
das Verfahren ferner einen Schritt f1. umfasst, wobei in Schritt f1. auf Grundlage der Informationen über die Reibung bestimmt wird, an welcher Position der Außenoberfläche der mindestens einen Führungsrinne eine Reibung vorhanden ist, die einen vorbestimmten Wert überschreitet; und/oder
das Verfahren ferner einen Schritt f2. umfasst, wobei in Schritt f2. auf Grundlage der Informationen über die Reibung bestimmt wird, wie groß die Reibung an einer vorbestimmten Position der Außenoberfläche der mindestens einen Führungsrinne ist; und/oder
das Verfahren ferner einen Schritt f3. umfasst, wobei in Schritt f3. auf Grundlage der Informationen über die Reibung bestimmt wird, ob an einer vorbestimmten Position in der mindestens einen Führungsrinne eine Reibung vorhanden ist, die einen vorbestimmten Wert überschreitet; und/oder
das Verfahren ferner einen Schritt f4. umfasst, wobei in Schritt f4. auf Grundlage der Informationen über die Reibung der Verlauf der Reibung entlang einer vorbestimmten Trajektorie entlang der Außenoberfläche der mindestens einen Führungsrinne bestimmt wird; und/oder
das Verfahren ferner einen Schritt f5. umfasst, wobei in Schritt f5. auf Grundlage der Informationen über die Reibung eine Änderung der Reibung in der Zeit einer vorbestimmten Trajektorie der Außenoberfläche der mindestens einen Führungsrinne oder einer vorbestimmten Position der Außenoberfläche der mindestens einen Führungsrinne bestimmt wird.

6. Verfahren nach einem der vorhergehenden Ansprüche, **dadurch gekennzeichnet, dass** die Außenoberfläche der mindestens einen Führungsrinne mit einem Schmiermittel (76) versehen wird, wenn aufgrund der Information über die Reibung festgestellt wird, dass die Reibung einen vorbestimmten Wert überschreitet.

7. Verfahren nach mindestens Anspruch 5, **dadurch gekennzeichnet, dass**:
die Außenoberfläche der mindestens einen Führungsrinne mit einem Schmiermittel (76) versehen wird, wenn in Schritt f2 festgestellt wird, dass die Reibung einen vorbestimmten Wert überschreitet, und/oder wenn in Schritt f4 festgestellt wird, dass die Reibung an der vorbestimmten Position einen vorbestimmten Wert überschreitet, und/oder wenn in Schritt f5 festgestellt wird, dass die Reibung an der vorbestimmten Position einen vorbestimmten Wert überschreitet.

8. Verfahren nach einem der vorhergehenden Ansprüche, **dadurch gekennzeichnet, dass** die Position und/oder Ausrichtung der mindestens einen Führungsrinne angepasst wird, wenn die Reibung einen vorbestimmten Wert überschreitet.

9. Verfahren nach mindestens Anspruch 5, **dadurch gekennzeichnet, dass** die Position und/oder Ausrichtung der mindestens einen Führungsrinne angepasst wird, wenn in Schritt f2 festgestellt wird, dass die Reibung einen vorbestimmten Wert überschreitet, und/oder wenn in Schritt f4 festgestellt wird, dass die Reibung an der vorbestimmten Position einen vorbestimmten Wert überschreitet, und/oder wenn in Schritt f5 festgestellt wird, dass die Reibung an der vorbestimmten Position einen vorbestimmten Wert überschreitet.

10. Verfahren nach einem der vorhergehenden Ansprüche, **dadurch gekennzeichnet, dass** anhand der ermittelten Reibung bestimmt wird, wo der Tropfen in der mindestens einen Führungsrinne auftrifft.

11. Verfahren nach einem der vorhergehenden Ansprüche, **dadurch gekennzeichnet, dass** auf Grundlage der ermittelten Reibung die Position, an der der Tropfen auftrifft, eingestellt wird.

12. Verfahren nach einem der vorhergehenden Ansprüche, **dadurch gekennzeichnet, dass** das Infrarotbild ein 3D-Bild ist.

13. System (1) zur Gewinnung von Informationen über die Reibung zwischen einem erhitzten Glastropfen (10) und mindestens einer Führungsrinne (6), wie z.B. einem Verteiler, einem Schöpfer, einem Trichter, einer langen Rinne und/oder einer Ablenkrinne, durch die der Glastropfen zu einer Form transportiert wird, um aus dem Glastropfen unter Verwendung der Form ein Glasprodukt zu formen, wobei das Glasprodukt hergestellt wird durch:
a. Bildung des erhitzten Glastropfens;
b. Transport des Glastropfens durch mindestens eine Führungsrinne zur Form;
c. Formen des Glastropfens zu dem Glasprodukt unter Verwendung der Form, wobei das System einen Infrarotsensor (52, 54, 56), wie z.B. eine Infrarotkamera, zum Erzeugen eines Bildes und eine Signalverarbeitungseinheit (50) zum Verarbeiten von Signalen, die von dem Infrarotsensor kommen, umfasst, **dadurch gekennzeichnet, dass** der Infrarotsensor so konfiguriert ist, dass er mindestens ein Infrarotbild einer Außenoberfläche (34, 36, 38) der mindestens einen Führungsrinne erzeugt, entlang derer im Betrieb der Tropfen transportiert wird, während er mit der Außenoberfläche in Kontakt kommt, und dass die Signalverarbeitungseinheit so konfiguriert ist, dass sie im Betrieb das mindestens eine Bild analysiert, um die Informationen über die Reibung zwischen dem erhitzten Glastropfen und der Außenoberfläche der mindestens einen Führungsrinne zu erhalten, entlang derer der Glastropfen transportiert wird, während er mit der Außenoberfläche in Kontakt kommt.

14. System nach Anspruch 13, **dadurch gekennzeichnet, dass** die Signalverarbeitungseinheit so konfiguriert ist, dass sie im Betrieb Informationen über die Reibung aus einer Bestimmung einer Intensität und/oder Farbe von Pixeln des mindestens einen Bildes und/oder aus einem Bild bestimmt, das gemacht wurde, nachdem der Tropfen mindestens einen Teil (70) der Außenoberfläche passiert hat.

15. System nach einem der Ansprüche 13 bis 14, **dadurch gekennzeichnet, dass** unter Steuerung der Signalverarbeitungseinheit mindestens ein erstes Bild gemacht wird, nachdem der Tropfen mindestens einen Teil (70) der Außenoberfläche passiert hat, und mindestens ein zweites Bild gemacht wird, bevor der Tropfen mindestens den Teil der Außenoberfläche passiert hat, wobei die Signalverarbeitungseinheit so konfiguriert ist, dass sie das erste und das zweite Bild miteinander vergleicht, um die Informationen über die Reibung zu erhalten, und/oder dass die Signalverarbeitungseinheit so konfiguriert ist, dass sie im Betrieb die Intensität und/oder Farbe mindestens eines ersten Pixels des ersten Bildes mit der Intensität und/oder Farbe mindestens eines zweiten Pixels des zweiten Bildes vergleicht, um die Informationen über die Reibung zwischen dem Glastropfen und der Außenoberfläche an der Stelle des ersten und/oder zweiten Pixels zu erhalten, wobei insbesondere das erste Pixel eine gleiche Position innerhalb des ersten Bildes wie das zweite Pixel innerhalb des zweiten Bildes hat.

16. System nach einem der Ansprüche 13 bis 15, **dadurch gekennzeichnet, dass** die Signalverarbeitungseinheit weiterhin zur Durchführung von Folgendem konfiguriert ist:
einem Schritt f1., wobei im Betrieb im Schritt f1. auf Grundlage der Information über die Reibung bestimmt wird, an welcher Position der Außenoberfläche der mindestens einen Führungsrinne eine Reibung vorhanden ist, die einen vorbestimmten Wert überschreitet; und/oder
einem Schritt f2., wobei im Betrieb im Schritt f2. auf Grundlage der Information über die Reibung bestimmt wird, wie groß die Reibung an einer vorbestimmten Position der Außenoberfläche der mindestens einen Führungsrinne ist; und/oder
einem Schritt f3., wobei im Betrieb im Schritt f3. auf Grundlage der Information über die Reibung bestimmt wird, ob an der vorbestimmten Position in der mindestens einen Führungsrinne eine Reibung vorhanden ist, die einen vorbestimmten Wert überschreitet; und/oder
einem Schritt f4., wobei im Betrieb im Schritt f4. auf Grundlage der Informationen über die Reibung der Verlauf entlang einer vorbestimmten Trajektorie entlang der Außenoberfläche der mindestens einen Führungsrinne bestimmt wird; und/oder
einem Schritt f5., wobei im Betrieb in Schritt f5. auf Grundlage der Information über die Reibung eine Änderung der Reibung in der Zeit einer vorbestimmten Trajektorie der Außenoberfläche der mindestens einen Führungsrinne oder einer vorbestimmten Position der Außenoberfläche der mindestens einen Führungsrinne bestimmt wird.

17. System nach einem der vorangehenden Ansprüche 13 bis 16, **dadurch gekennzeichnet, dass** das System so konfiguriert ist, dass es im Betrieb unter Steuerung der Signalverarbeitungseinheit die Außenoberfläche der mindestens einen Führungsrinne mit einem Schmiermittel (76) versieht, wenn auf Grundlage der Informationen über die Reibung festgestellt wird, dass die Reibung einen vorbestimmten Wert überschreitet.

18. System nach Anspruch 16 und wahlweise einem der Ansprüche 13 bis 15, 17, **dadurch gekennzeichnet, dass** das System so konfiguriert ist, dass es im Betrieb unter Steuerung der Signalverarbeitungseinheit die Außenoberfläche der mindestens einen Führungsrinne mit einem Schmiermittel (76) versieht, wenn in Schritt f2. durch die Signalverarbeitungseinheit festgestellt wird, dass die Reibung den vorbestimmten Wert überschreitet, und/oder wenn in Schritt f4. durch die Signalverarbeitungseinheit festgestellt wird, dass die Reibung den vorbestimmten Wert überschreitet, und/oder wenn in Schritt f5. durch die Signalverarbeitungseinheit festgestellt wird, dass die Reibung den vorbestimmten Wert überschreitet.

19. System nach einem der vorangehenden Ansprüche 13 bis 18, **dadurch gekennzeichnet, dass** das System so konfiguriert ist, dass es im Betrieb unter Steuerung der Signalverarbeitungseinheit die Position und/oder Ausrichtung der mindestens einen Führungsrinne anpasst, wenn die Reibung einen vorbestimmten Wert überschreitet.

20. System nach Anspruch 16 und wahlweise einem der Ansprüche 13 bis 15, 17 bis 19, **dadurch gekennzeichnet, dass** das System so konfiguriert ist, dass es im Betrieb unter Steuerung der Signalverarbeitungseinheit die Position und/oder Ausrichtung der mindestens einen Führungsrinne anpasst, wenn in Schritt f2. durch die Signalverarbeitungseinheit bestimmt wird, dass die Reibung den vorbestimmten Wert überschreitet, und/oder wenn in Schritt f4. durch die Signalverarbeitungseinheit bestimmt wird, dass die Reibung den vorbestimmten Wert überschreitet, und/oder wenn in Schritt f5. durch die Signalverarbeitungseinheit bestimmt wird, dass die Reibung den vorbestimmten Wert überschreitet.

21. System nach einem der vorangehenden Ansprüche 13 bis 20, **dadurch gekennzeichnet, dass** die Signalverarbeitungseinheit so konfiguriert ist, dass sie im Betrieb auf Grundlage der ermittelten Reibung bestimmt, wo der Tropfen in der mindestens einen Führungsrinne auftrifft, und/oder dass das System so konfiguriert ist, dass es im Betrieb unter Steuerung der Signalverarbeitungseinheit auf Grundlage der ermittelten Reibung die Position einstellt, an der der Tropfen auftrifft, und/oder dass der mindestens eine Sensor so konfiguriert ist, dass er das Bild im Format eines 3D-Bildes erstellt, und/oder dass das System eine Vielzahl von Infrarotsensoren (52, 54, 56) umfasst, um das Bild im Format eines 3D-Bildes zu erstellen.

## Revendications

1. Procédé d'obtention d'informations concernant le frottement entre une paraison de verre chauffée (10) et au moins une goulotte de guidage (6), telle qu'un distributeur, une pelle, une goulotte longue et/ou un bac déflecteur, à travers lequel la paraison de verre est transportée vers un moule (8) pour former un produit de verre à partir de la paraison de verre en utilisant le moule, dans lequel le produit de verre est fabriqué par les étapes consistant à :
a former la paraison de verre chauffée;
b transporter la paraison de verre à travers l'au moins une goulotte de guidage vers le moule;
c former la paraison de verre dans le produit en verre en utilisant le moule, **caractérisé en ce que** le procédé comprend en outre les étapes consistant à :
d réaliser au moins une image infrarouge d'une surface de partie extérieure (34, 36, 38) de l'au moins une goulotte de guidage le long de laquelle, lors de l'utilisation, la paraison tout en établissant un contact avec la surface de partie extérieure est transportée; et
e analyser l'au moins une image pour obtenir les informations concernant le frottement entre la paraison de verre chauffée et la surface de partie extérieure le long de laquelle la paraison de verre tout en établissant un contact avec la surface de partie extérieure est transportée.

2. Procédé selon la revendication 1, **caractérisé en ce que** les informations concernant le frottement sont déterminées par la détermination d'une intensité et/ou de la couleur de pixels de l'au moins une image.

3. Procédé selon l'une quelconque des revendications précédentes, **caractérisé en ce que** les informations concernant le frottement sont déterminées à partir d'une image qui a été effectuée après que la paraison a passé au moins une partie (70) de la surface de la partie extérieure.

4. Procédé selon l'une quelconque des revendications précédentes, **caractérisé en ce qu'** au moins une première image est réalisée après que la paraison a passé au moins une partie (70) de la surface de partie extérieure et qu'au moins une deuxième image est réalisée avant que la paraison n'ait atteint au moins ladite partie de la surface de partie extérieure, dans lequel les première et deuxième images sont comparées l'une à l'autre pour obtenir les informations concernant le frottement dans lequel, facultativement, l'intensité et/ou la couleur d'au moins un premier pixel de la première image est comparée à l'intensité et/ou à la couleur d'au moins un deuxième pixel de la deuxième image pour obtenir les informations autour du frottement entre la paraison de verre et la surface de partie extérieure à l'emplacement du premier et/ou du deuxième pixel, dans lequel en particulier le premier pixel a une même position à l'intérieur de la première image que le deuxième pixel à l'intérieur de la deuxième image.

5. Procédé selon l'une quelconque des revendications précédentes, **caractérisé en ce que** le procédé comprend en outre une étape f1, dans lequel, à l'étape f1, sur la base des informations concernant le frottement, il est déterminé à quelle position de la surface de partie extérieure de l'au moins une goulotte de guidage un frottement est présent qui dépasse une valeur prédéterminée et/ou le procédé comprend en outre une étape f2. dans lequel à l'étape f2, sur la base des informations concernant le frottement, il est déterminé quelle grandeur le frottement à une position prédéterminée de la surface de partie extérieure de l'au moins une goulotte de guidage et/ou le procédé comprend en outre une étape f3, dans lequel à l'étape f3, sur la base des informations concernant le frottement, il est déterminé s'il est présent à une position prédéterminée dans l'au moins une goulotte de guidage un frottement qui dépasse une valeur prédéterminée, et/ou le procédé comprend en outre une étape f4, dans lequel, à l'étape f4, sur la base des informations concernant le frottement, le déroulement du frottement le long d'une trajectoire prédéterminée le long de la surface de partie extérieure de l'au moins une goulotte de guidage est déterminé, et/ou le procédé comprend en outre une étape f5 dans lequel à l'étape f5 sur la base des informations concernant le frottement d'un changement du frottement dans le temps d'une trajectoire prédéterminée de la surface de partie extérieure de l'au moins une goulotte de guidage ou d'une position prédéterminée de la surface de partie extérieure de l'au moins un une creux de guidage est déterminé.

6. Procédé selon l'une quelconque des revendications précédentes, **caractérisé en ce que** la surface de partie extérieure de l'au moins une goulotte de guidage est pourvue d'un lubrifiant (76) lorsqu'il est sur la base des informations concernant le frottement, il est déterminé que le frottement dépasse une valeur prédéterminée.

7. Procédé selon au moins la revendication 5, **caractérisé en ce que** la surface de partie extérieure de l'au moins une goulotte de guidage est pourvue d'un lubrifiant (76) lorsqu'il est déterminé à l'étape f2 que le frottement dépasse une valeur prédéterminée, et/ou lorsqu'il est déterminé à l'étape f4 que le frottement au niveau d'une position prédéterminée dépasse une valeur prédéterminée, et/ou lorsqu'il est déterminé à l'étape f5 que le frottement à la position prédéterminée dépasse un une valeur prédéterminée.

8. Procédé selon l'une quelconque des revendications précédentes, **caractérisé en ce que** la position et/ou l'orientation de l'au moins une goulotte de guidage est ajustée lorsque le frottement dépasse une valeur prédéterminée.

9. Procédé selon au moins la revendication 5, **caractérisé en ce que** la position et/ou l'orientation de l'au moins une goulotte de guidage est ajustée lorsqu'il est déterminé à l'étape f2 que le frottement dépasse une valeur prédéterminée et/ou lorsqu'à l'étape f4 il est déterminé que le frottement à la position prédéterminée dépasse une valeur prédéterminée et/ou lorsqu'à l'étape f5, il est déterminé que le frottement à la position prédéterminée dépasse une valeur prédéterminée.

10. Procédé selon l'une quelconque des revendications précédentes, **caractérisé en ce que**, sur la base du frottement déterminé, il est déterminé où la paraison frappe l'au moins une goulotte de guidage.

11. Procédé selon l'une quelconque des revendications précédentes, **caractérisé en ce que**, sur la base du frottement déterminé, la position où la paraison frappe est définie.

12. Procédé selon l'une quelconque des revendications précédentes, **caractérisé en ce que** l'image infrarouge est une image 3D.

13. Système (1) pour obtenir des informations concernant le frottement entre une paraison de verre chauffée (10) et au moins une goulotte de guidage (6), telle qu'un distributeur, une pelle, un entonnoir, une goulotte longue et/ou un bac déflecteur, à travers lequel la paraison de verre est transportée vers un moule pour former un produit de verre à partir de la paraison de verre en utilisant le moule, dans lequel le produit de verre est fabriqué par :
a la formation de la paraison de verre chauffée;
b le transport de la paraison de verre à travers l'au moins une goulotte de guidage vers le moule;
c la formation de la paraison de verre dans le produit de verre en utilisant le moule, dans lequel le système comprend un capteur infrarouge (52, 54, 56) tel qu'une caméra infrarouge pour fabriquer une image et une unité de traitement de signal (50) pour traiter des signaux provenant du capteur infrarouge, **caractérisé en ce que** le capteur infrarouge est configuré pour réaliser au moins une image infrarouge d'une surface de partie extérieure (34, 36, 38) de l'au moins une goulotte de guidage le long de laquelle, lors de l'utilisation, la paraison tout en établissant un contact avec la surface de partie extérieure est transportée et **en ce que** l'unité de traitement de signal est configurée pour, lors de l'utilisation, l'analyse de l'au moins une image pour obtenir les informations concernant le frottement entre la paraison de verre chauffée et la surface de partie extérieure de l'au moins une goulotte de guidage le long de laquelle la paraison de verre tout en établissant un contact avec la surface de partie extérieure est transporté.

14. Système selon la revendication 13, **caractérisé en ce que** l'unité de traitement de signal est configurée pour, en utilisation, déterminer des informations concernant le frottement à partir d'une détermination d'une intensité et/ou d'une couleur de pixels de l'au moins une image, et/ou à partir d'une image qui a été effectuée après que la paraison a passé au moins une partie de la surface de partie extérieure (70).

15. Système selon l'une quelconque des revendications 13 ou 14, **caractérisé en ce que**, sous le contrôle de l'unité de traitement de signal, au moins une première image est effectuée après que la paraison a passé au moins une partie de la surface de partie extérieure (70) et au moins une deuxième image est réalisée avant que la paraison ait passé au moins ladite partie de la surface de partie extérieure, dans lequel l'unité de traitement de signal est configurée pour comparer les première et deuxième images l'une à l'autre pour obtenir les informations concernant le frottement, et/ou l'unité de traitement de signal est configurée pour, en utilisation, comparer l'intensité et/ou la couleur d'au moins un premier pixel de la première image avec l'intensité et/ou la couleur d'au moins un deuxième pixel de la deuxième image pour obtenir les informations concernant le frottement entre la paraison de verre et la surface de partie extérieure à l'emplacement du premier et/ou du deuxième pixel, dans lequel en particulier le premier pixel a une même position dans la première image que le deuxième pixel à l'intérieur de la deuxième image.

16. Système selon l'une quelconque des revendications 13 à 15, **caractérisé en ce que** l'unité de traitement de signal est en outre configurée pour effectuer
une étape f1, dans lequel, lors de l'utilisation, à l'étape f1, sur la base des informations concernant le frottement, il est déterminé à quelle position de la surface de partie extérieure de l'au moins une goulotte de guidage un frottement est présent qui dépasse une valeur prédéterminée, et/ou
une étape f2, dans lequel, lors de l'utilisation, à l'étape f2, sur la base des informations concernant le frottement, il est déterminé de quelle amplitude est le frottement à une position prédéterminée de la surface de partie extérieure de l'au moins une goulotte de guidage, et/ou
une étape f3, dans lequel, lors de l'utilisation, à l'étape f3, sur la base des informations concernant le frottement, il est déterminé si, à la position prédéterminée dans l'au moins une goulotte de guidage, un frottement est présent qui dépasse une valeur prédéterminée, et/ou
une étape f4, dans lequel, lors de l'utilisation, à l'étape f4, sur la base des informations concernant le frottement, le déroulement du frottement le long d'une trajectoire prédéterminée le long de la surface de partie extérieure de l'au moins une goulotte de guidage est déterminé, et/ou
une étape f5, dans lequel, lors de l'utilisation, à l'étape f5, sur la base des informations concernant le frottement d'un changement du frottement dans le temps d'une trajectoire prédéterminée de la surface de partie extérieure de l'au moins une goulotte de guidage ou d'une position prédéterminée de la surface de partie extérieure de l'au moins une goulotte de guidage est déterminé.

17. Système selon l'une quelconque des revendications précédentes 13 à 16, **caractérisé en ce que** le système est configuré pour, lors de l'utilisation, sous le contrôle de l'unité de traitement de signal, la fourniture de la surface de partie extérieure de l'au moins une goulotte de guidage avec un lubrifiant (76) lorsque, sur la base des informations concernant le frottement, il est déterminé que le frottement dépasse une valeur prédéterminée.

18. Système selon la revendication 16 et facultativement l'une des revendications 13 à 15, 17, **caractérisé en ce que** le système est configuré pour, lors de l'utilisation, sous le contrôle de l'unité de traitement de signal, la fourniture de la surface de partie extérieure de l'au moins une goulotte de guidage avec un lubrifiant (76) lorsqu'à l'étape f2 il est déterminé par l'unité de traitement de signal que le frottement dépasse la valeur prédéterminée, et/ou lorsqu'à l'étape f4 il est déterminé par l'unité de traitement de signal que le frottement dépasse la valeur prédéterminée, et/ou lorsqu'à l'étape f5 il est déterminé par l'unité de traitement de signal que le frottement dépasse la valeur prédéterminée.

19. Système selon l'une quelconque des revendications précédentes 13 à 18, **caractérisé en ce que** le système est configuré pour, lors de l'utilisation, sous le contrôle de l'unité de traitement de signal, ajuster la position et/ou l'orientation de l'au moins une goulotte de guidage lorsque le frottement dépasse une valeur prédéterminée.

20. Système selon la revendication 16 et facultativement l'une des revendications 13 à 15, 17 à 19, **caractérisé en ce que** le système est configuré pour, lors de l'utilisation, sous le contrôle de l'unité de traitement de signal, ajuster la position et/ou l'orientation de l'au moins une goulotte de guidage lorsque à l'étape f2 il est déterminé par l'unité de traitement de signal que le frottement dépasse la valeur prédéterminée, et/ou à l'étape f4, il est déterminé par l'unité de traitement de signal que le frottement dépasse la valeur prédéterminée, et/ou lorsqu'à l'étape f5, il est déterminé par l'unité de traitement de signal que le frottement dépasse la valeur prédéterminée.

21. Système selon l'une quelconque des revendications précédentes 13 à 20, **caractérisé en ce que** l'unité de traitement de signal est configurée pour, en utilisation, sur la base du frottement déterminé, déterminer où la paraison frappe l'au moins une goulotte de guidage, et/ou le système est configuré pour, lors de l'utilisation, sous le contrôle de l'unité de traitement de signal, sur la base du frottement déterminé, régler la position où le paraison frappe, et/ou **en ce que** l'au moins un capteur est configuré pour réaliser l'image dans le format d'une image 3D, et/ou **en ce que** le système comprend une pluralité de capteurs infrarouges (52, 54, 56) pour réaliser l'image dans le format d'une image 3D.
